# EUROPEAN PATENT APPLICATION

(11) **EP 3 584 198 A1**
(43) Date of publication of application: **25.12.2019**
(21) Application number: 19181213.0
(22) Date of filing: 19.06.2019
(51) Int. Cl.: B65G 1/137, B07C 7/02

(54) **DISTRIBUTING INSTALLATION FOR DISTRIBUTING OBJECTS, IN PARTICULAR PRINTED PUBLICATIONS**

(30) Priority: 20.06.2018 IT 201800006516
(71) Applicant: D.P.E. Data Processing Engineering S.r.l., 20139 Milano (IT)
(72) Inventor: Romano, Giorgio, 20139 Milano (IT); Greco, Paolo, 20139 Milano (IT)
(74) Representative: Siniscalco, Fabio

(57) **Abstract**

An installation (50) for distributing objects in general and in particular printed publications has one or more shelf units (51) having supporting planes (53) to be filled with the publications and provided with displays that indicate how many copies of the publications to pick up from each supporting plane (53), conveyor belts (58-61) for conveying packets of copies picked up from the shelf units (51), one or more packaging terminal stations (62) that the packets of conveyed copies reach and which are provided with a plurality of containers (C) that are suitable for containing the publications, with identification devices that identify the counted copies, with one or more monitors (63) to display the distribution scheme of the publications in the containers (C), and with sensor devices for detecting placing of copies in the containers (C); a control unit coordinates and controls the installation operations. At the shelf units (51), at least two aligned conveyor belts (58) are provided, each driven independently of one another according to one direction or according to an opposite advancement direction. This installation is highly productive, efficient, simple and inexpensive.

## Description

### BACKGROUND OF THE INVENTION

The object of the current invention is an installation for distributing objects in general, and in particular printed publications, from a picking-up point to an ordered collecting point for sending to sales outlets.

### PRIOR ART

In distribution of daily and periodical publications sector, work distribution companies, which work that receive the quantities to be distributed to the sales outlets, for example newsagents of a specific area, prepare the daily "distribution schedules", package in containers or packets the publications intended for each sales outlet, and send the containers or the packets relating to the publications for that day to each single sales outlet.

In most cases, the work in these distribution companies is performed manually, using a certain number of operators.

In general, two operating modes exist for packaging printed publications.

In a first operating mode, a shelf unit is arranged with a series of cells, in each of which the container is inserted relating to a determined sales outlet. Each operator places one publication at a time in the containers, placing in each container a specific number of copies of the publication that is indicated to the operator by a computerized system that is activated by reading the barcode present on the publication.

In the second operating mode, the publications to be distributed are arranged on one or more tables. The operator collects all the publications intended for a sales outlet and places the publications in a container intended for that sales outlet. Also in this case, a computerized system indicates to the operator the quantities of copies of each publication to be placed in the container relating to the sales outlet.

In the first case, all the containers are thus filled of all sales outlets with one publication at a time, in the second case, on the other hand, a container of one sales outlet at a time is filled with all the publications envisaged for that work cycle.

If distinct operators process a limited number of publications and there are several containers for the same sales outlet, in order to be able to reach suitable levels of installation productivity the different containers of the same sales outlet used by each operator in his own work area have to be unified, with risks of complication and difficulties of managing processing.

Distributing installations exist that mechanize a large part of the work performed by the operators. See for example European patent applications EP3088340 and EP3138635.

These known types of installation have an operating principle according to which all the containers are filled with one publication a time.

These types of installation provide:
- an access point where just one operator operates for the publication to be distributed;
- a static multi-storey warehouse with as many containers as there are sales outlets.

At the input point, the operator picks up a copy of the publication to be distributed and notifies the control computer by reading the barcode of the copy with a manual reader. After actuating the distribution, the computer terminal indicates him on the monitor the copies to be inserted for the first sales outlet to be packaged; the operator counts the copies; the packet of copies, counted by the operator, is inserted into the input belt of the installation.

A weighing station checks that the quantity corresponds to what has been requested; if the check does not pass, the packet is stopped at the exit from the weighing station and the operator has to pick it up and repeat the operation. If the count is nevertheless correct, the operator can force the installation to accept the packet and take it to the destination.

Downstream of the input station, the installation has a sorting system that has the aim of taking the accepted packet to the container designated by the supervisor computer of the installation: the container relates to one of the sales outlets for which the publications are intended. A container exists for each sales outlet to be served.

These types of known installation have various problems that are listed here below.

It is necessary to take the publications to distribution one at a time, so the staff assigned to this function are poorly deployed.

The parking place for all the publications to be distributed has to be set up.

The operator counts and enters the copies and has to wait for the signal of the control computer before being able to enter the copies of the next sales outlet.

The operator has to take back the entered copies if the weight check is not correct.

The installation has to have a pre-assigned place in the warehouse for all the existing sales outlets, thus an enormous cost of technology to be created and maintained and a corresponding reserved space cost.

If the number of sales outlets to be served has to be increased beyond those that are available in the warehouse, the installation has to be extended.

The single containers, that are filled during processing, have to be extracted and they have to be stored temporarily whilst waiting for the installation to be emptied.

The installation has to be emptied when the distribution of all publications has finished, adopting a suitable container conveying and selection technology; this has to occur at the moment at which the means of transport is waiting to depart, delaying delivery to all the sales outlets, and preventing the sales outlets being prioritized for which delivery journey time is longer.

### OBJECT OF THE INVENTION

The object of the present invention is to propose an installation for distributing objects in general, and in particular printed publications, which is able to solve the aforesaid problems and is in particular highly productive, efficient, simple and inexpensive.

### SHORT DESCRIPTION OF THE INVENTION

This object is achieved by a distributing installation according to claim 1.

### SHORT DESCRIPTION OF THE DRAWINGS

In order to better understand the invention, a description is given below of two nonlimiting exemplary embodiments thereof, illustrated in the attached drawings in which:
fig. 1 is a perspective view of a first distributing installation according to the invention;
figs 2-7 are enlarged perspective views of details of the installation of fig. 1;
fig. 8 is a perspective view of a second distributing installation according to the invention;
figs 9, 10 are enlarged perspective views of details of the installation of fig. 8.

### DETAILED DESCRIPTION OF THE INVENTION

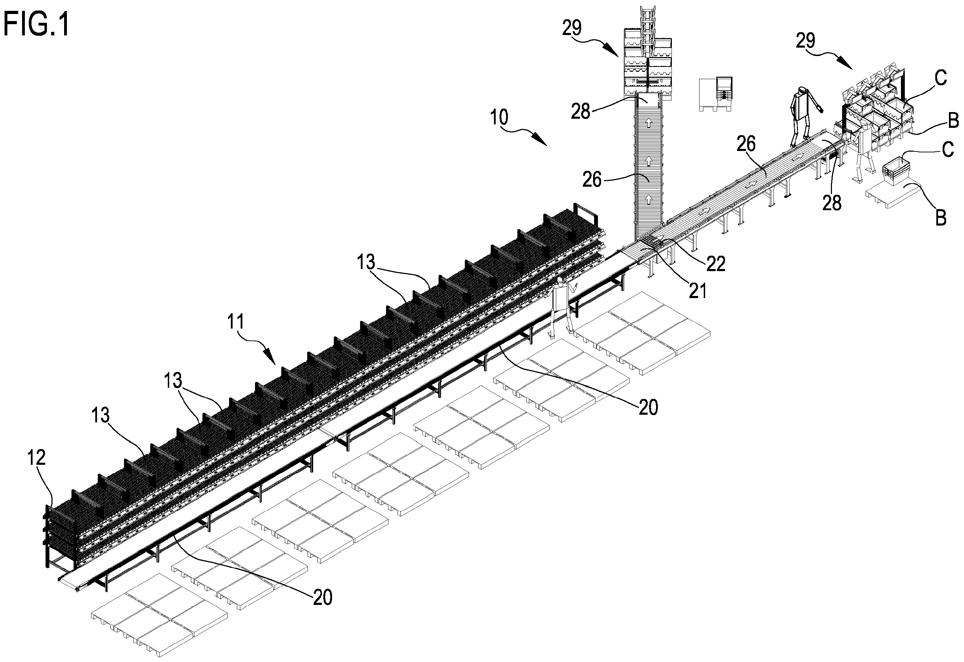

The distributing installation illustrated in fig.1, indicated generically with 10, is intended for the distribution of printed publications, for example periodical publications.

The installation 10 provides a picking up area formed by a shelf unit 11.

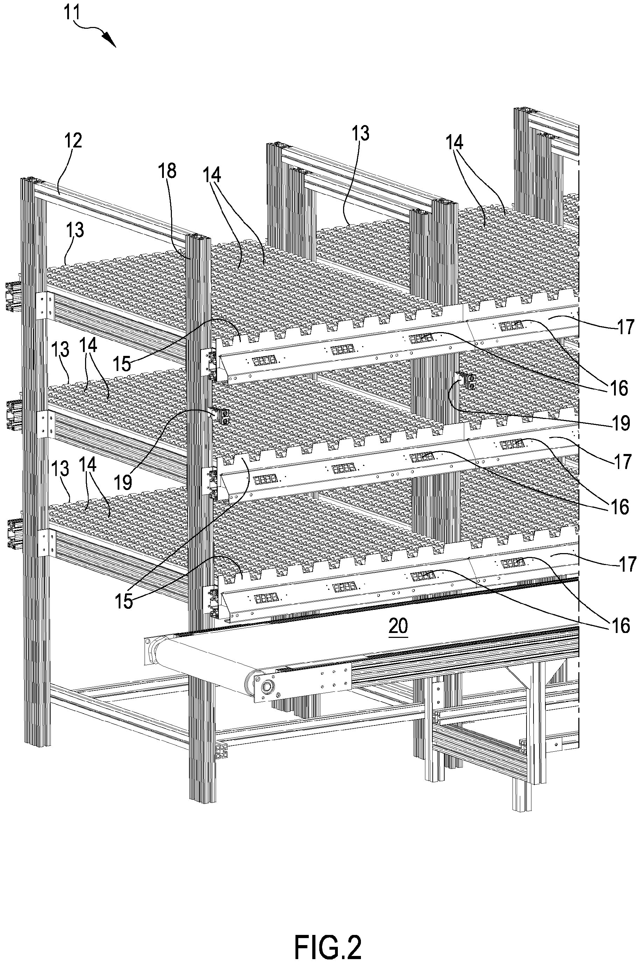

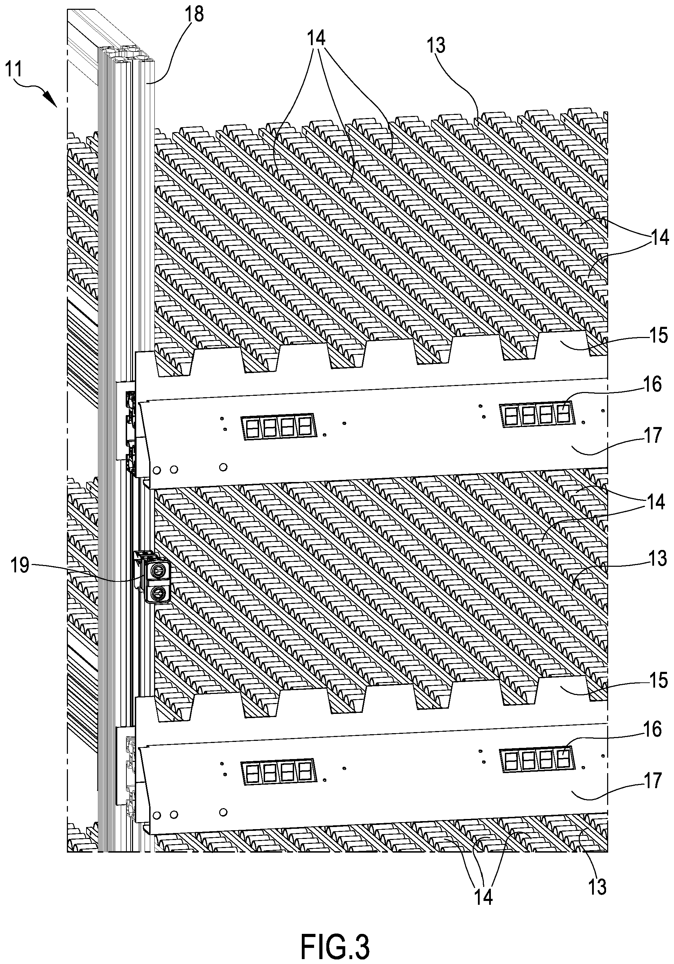

With reference to figs 1,2,3, the shelf unit 11 has a framework 12 to which a plurality of support planes 13 is fitted arranged according to a series of vertical rows; in the first embodiment the shelf unit 11 has twenty vertical rows of three supporting planes 13 each. Each supporting plane 13 corresponds to three virtual pick-up cells and each row of three supporting planes 13 corresponds to a cell module.

Each supporting plane 13 is provided with small idler rollers 14 arranged in a series of parallel rows; each supporting plane 13 is further tilted downwards to go towards the front face of the shelf unit 11.

At the low end part of each tilted supporting plane 13, on the front face of the shelf unit 11 a toothed stop barrier 15 is arranged, where the stacks of publications stop by the force of gravity.

At the stop barriers 15 numeric LED displays 16 are provided that are fitted to plates 17 that are integral with the stop barriers 15. The single LEDs can take on various colours, for example red, green and yellow, to provide operators with different information, when necessary.

Along the uprights 18 of the framework 12 of the shelf unit 11 a series of lighted push buttons 19 is also fitted, each at a respective cell module, which can assume two different colours, for example green and red, to indicate two different statuses, as will be seen below.

At the stop barriers 15 of the shelf unit 11 two rectilinear, aligned and consecutive conveyor belts 20 are arranged that run along all the shelf unit 11. Each conveyor belt 20 is driven independently of the others according to one direction or according to an opposite advancement direction.

After the conveyor belts 20, at one end of the shelf unit 11, a first driven rectilinear roller conveyor 21 starts.

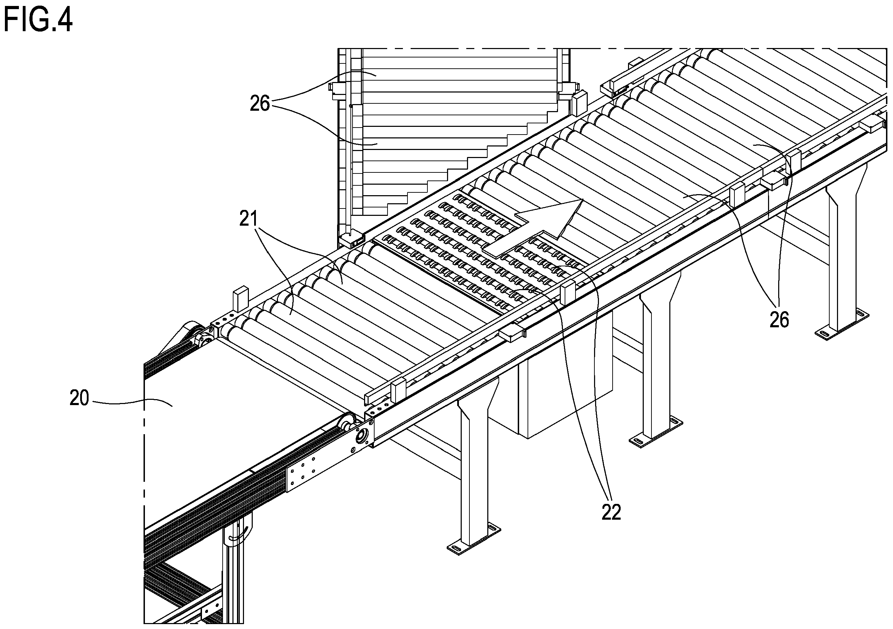

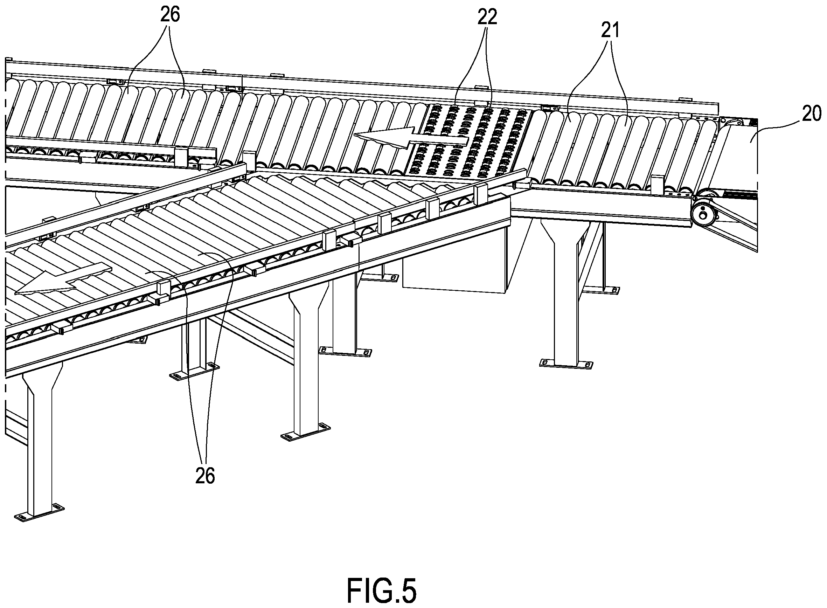

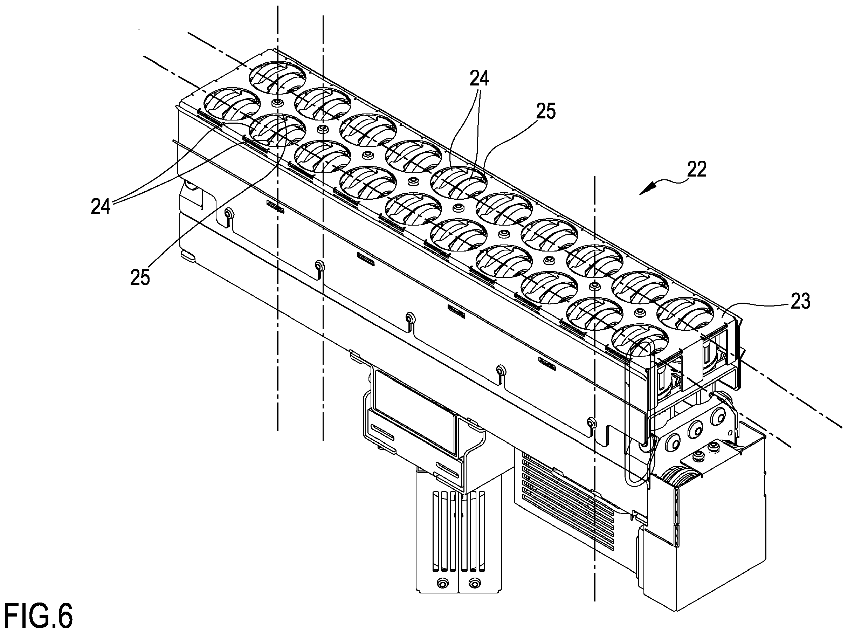

With particular reference to figs 4, 5 after the roller conveyor 21 a roller switching means 22 is arranged that is able to route the publications towards the one or other of two further rectilinear roller conveyors. The switching means 22 is of known type and is illustrated in detail in fig.6: it provides a containing structure 23 inside which a series of parallel rows of pairs of driven rollers 24 is arranged. Each pair of rollers 24 protrudes from a circular opening 25 of the containing structures 23 and is able to rotate around a first, horizontal axis, to advance the publications; further, each pair of rollers 24 is able to rotate also around a second axis that is vertical, perpendicular to the first axis to move to one or the other of two positions corresponding to the two different aforesaid routing directions. Some axes are indicated by a dashed line in fig. 6.

The two further rectilinear roller conveyors downstream of the switching means 22 are both indicated with 26, are identical, and are provided with the same number of zones motor-driven and controlled singly.

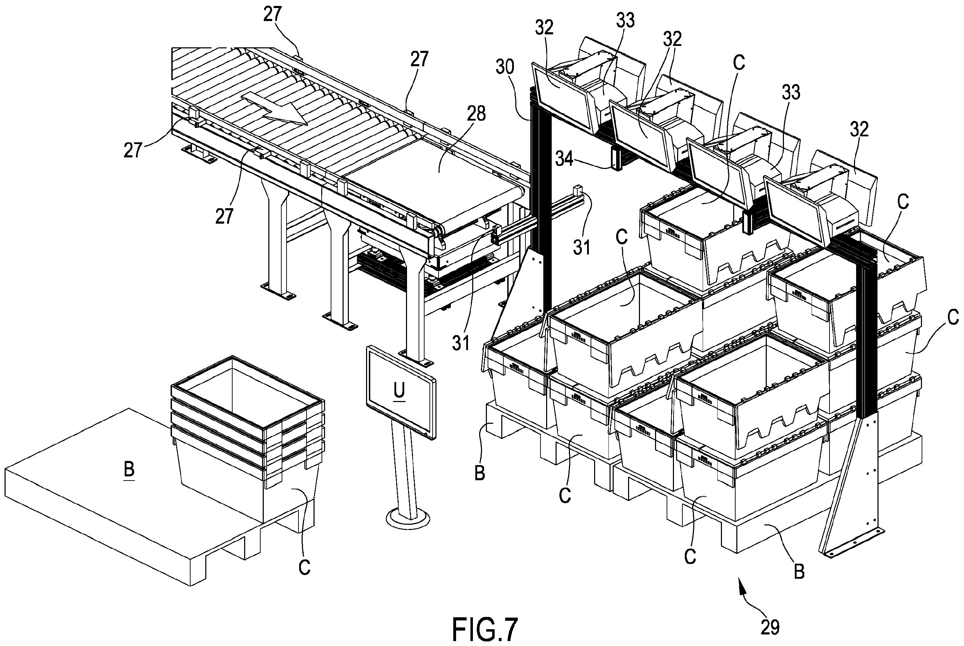

At the entry and exit of the roller conveyor 21 and in the various zones of each roller conveyor 26, suitable sensors are placed for managing the entry, advancement and exit of the packets. These sensors can be barrier sensors and are shown by way of example only in fig.7, where they are indicated with 27.

At the end of each roller conveyor 26 electronic scale 28 is present for weighing the publications.

At each scale 28 there is an end packaging station 29 at which two operators are intended to work.

The station 29 is clearly visible in fig.7.

In the embodiment illustrated, the station 29 provides two conveyable pallets B alongside one another, on each of which four containers C are arranged that are provided with reclosable lids.

Each container C is intended to contain the publications packaged for just one customer. When a container is full, once the lid is closed and an identifying label is affixed, a second container C can be rested thereupon that is of the same type and which is intended for the same customer, and so on up to, for example, four stacked containers C.

The two pallets B thus house, in an ordered manner, the containers C of eight customers.

The number of customers present in processing in the station 29 and during the picking up cycle is defined at the start of the distribution cycle.

The station 29 provides a framework 30 arranged straddling the pallets B and the containers C.

Two barcode readers 31, one for each operator, are fitted to the framework 30, at the scales 28.

Eight touchscreen monitors 32 controlled by computer are arranged above the containers C, fitted to the framework 30; four monitors 32 are arranged on the side of an operator and another four are arranged on the opposite side where the other operator operates.

Each monitor 32 overlooks a respective pair of containers C. Between the monitor 32 that overlook the same pair of containers C, a label printer 33 is present that is fitted to the framework 30, for a total of four printers 33. Each printer 33 is at the disposition of the two operators.

Below the monitors 32, four camera sensors 34 are present for checking placing of the publications in the containers; each sensor 34 is arranged at a respective pair of containers C. These sensors 34 check whether the copies have been placed inside the containers C. Preferably, the camera sensors 34 are 3D reading sensors that enable the volume occupied by the publications in the containers to be evaluated quantitatively.

The entire installation 10 is managed by a control unit U, illustrated schematically in fig.7, connected to the numeric displays 16 and to the luminous push buttons 19, further connected to the motors of the conveyor belts 20, of the roller conveyors 21 and 26, and of the roller switching means 22, and to the electronic scales 28, and lastly connected to the barrier sensors 27, to the barcode readers 31, to the monitors 32, to the printers 33, and to the camera sensors 34.

The operation of the installation 10 is as follows.

On the shelf unit 11 one or more operators act who move along the shelf unit. If there is more than one operator, each operator works on the same pick-up cell unit. All this is communicated, at the start of the work cycle, to the control unit U.

Beforehand, on the supporting planes 13 of the shelf units 11 the copies of the various publications are arranged in an ordered manner in accordance with what is indicted by the control unit U to the operators, for example by monitors that are not illustrated. On each supporting plane 13 three stacks of copies of printed publications are arranged, each stack at a numeric display 16. Each stack of publications refers to copies of a specific publication that is the same as or different from that of the other stacks arranged on the supporting planes 13 of the shelf units 11. The idler rollers 14 of the supporting planes 13 and the tilt of the supporting planes 13 cause the copies to slide against the stop barriers 15, ready to be picked up.

When the distribution cycle starts, the conveyor belts 20 start to move. The control unit U lights up with a green colour the push button 19 of the first cell module where copies to pick up are present. On the displays 16, the number of copies to pick up is indicated by the control unit U and the operator removes the copies indicated by the displays 16 and places the copies on one of the conveyor belts 20, stacking, without separating, them. For his own convenience and in order to work rapidly, the operator can also remove more than one packet of copies until the total indicated by the displays 16 is reached. The single packets can also be placed on the conveyor belt 20 separately or superimposed, but not in single copies.

If the number of copies to pick up is greater than the number of copies that make up a so-called publisher pack (i.e. the pack with which the copies arrive packaged and tied by the publisher who produced them), the control unit U presents to the operator separately the number of entire packs to be removed and the number of loose copies, with a sequence of numbers of the type "1--3" to indicate that an entire pack and three loose copies should be picked up.

For greater clarity, the numbers that indicate the entire packs and the number that indicate the loose copies can be of a different colour.

If the conveyor belt 20 is stationary for a moment, the operator can also place a new packet of copies of a different publication on a packet of copies already present on the conveyor belt and belonging to a different publication, provided that it is rotated by 90° in order to make it visible to subsequent operators; in this manner it can continue work without stopping.

The relative motion between the operator and the conveyor belt 20 helps the operator to insert the packets next to one another separately, to enable the control unit U to manage the accumulation of the packets on the subsequent zoned driven roller conveyor 26.

The operator advances in the direction opposite to the motion of the conveyor belt 20, thus from right to left in fig. 1 until the publications are picked up from all the cells of a cell module.

The operation that has just been disclosed represents a pick-up cycle that may refer to a number of customers that is variable from one to eight, as defined preferably at the start of the work cycle. The control unit U determines on a case by case basis the number of customers comprised in that work cycle, up to the maximum permitted by the geometry of the installation, i.e. eight in the embodiment, in complete autonomy.

Once the end of the shelf unit 11 is reached, or the module is reached on which the red lighted luminous push button 19 is present, the pick-up cycle is terminated and the operator will press the red push button to inform the control unit U of the end of the pick-up cycle.

At the end of the pick-up cycle, the control unit U will again light up the green push button 19 to indicate the most favourable starting point for the next pick-up cycle. The operator will go as far as the cell module with the lighted green push button and during this path will replenish the cells that are empty or have few copies with publications. When the operator reaches the aforesaid cell module, the operator will press the green switch of the subsequent pick-up cycle start module; only then will the displays 16 relating to the new work cycle be switched on.

The packets of copies placed on the conveyor belts 20 are dragged forwards until they reach the roller conveyor 21 and then, through the roller switching means 22, one of the two roller conveyors 26.

Routing the packets inside the roller conveyor 21 to one or the other of the subsequent roller conveyors 26 by the roller switching means 22 is decided between one pick-up cycle and the next.

The barrier sensors 27 arranged along the roller conveyors 21 and 26 enable the control unit U to detect the transit of the packets on the roller conveyors 21 and 26 and to stop or start up the roller conveyors 21 and 26, depending on the needs of the process of advancement of the packets in order to maintain the packets in an ordered position along the path.

The change of direction of the roller switching means 21 will be activated by the control unit U at the end of a work cycle of the operator of the shelf unit 11, i.e. when the operator has ended picking up for a group of customers, and after the correct time has elapsed from the end of the preceding pick-up cycle (i.e. when the cycle end red push button is pressed) to enable the transit of the last packet beyond the roller switching means 21.

The control unit U will also control the possible concomitant stop of the conveyor belt 20 for reasons connected to the process.

Each of the packets conveyed by one of the two roller conveyors 26 reaches the scale 28, where it is weighed and picked up by a station 29 operator.

When a packet is picked up, the resulting empty space is filled up immediately by moving forwards all the preceding packets.

If during processing all the zones of the roller conveyor 26 fill up, new packets cannot be inserted and the conveyor belts 20 will come to a temporary stop.

As soon as the operators of the station 29 pick up new packets, the conveyor belts 20, the roller conveyor 21, the roller switching means 22 and the roller conveyor 26 will restart.

Once the packet of publications has been picked up from the scale 28, the operator has the barcode of the publication read by one of the readers 31 and immediately on the monitors 32 the quantities are displayed to be inserted into the containers C of each customer.

Each monitor 32 shows the data in a manner corresponding geometrically to the arrangement of the containers C to which they refer.

The control unit U can be configured for actuating two different work modes in the station 29:
a) "package of eight newsagents for each operator" work mode.
   In this mode, whenever an operator removes a packet, the corresponding copies have to be inserted potentially into all the available containers C, which in the embodiment are eight arranged in two rows.
b) "in tandem - package of four newsagents for each operator" work mode.

In this mode, whenever an operator removes a packet, the corresponding copies have to be inserted only into the four containers C nearest the operator, whilst the other four will be managed by the other operator, for the same publication. In this mode it is possible that the second operator has to request the necessary copies from the other operator.

When the operator deems it necessary, he will press a "container full" button on the monitor 32 relating to that container C.

At the "container full" command, whilst the operator closes the lids of the container C, printing immediately follows on one of the printers 33 of the label accompanying and identifying the container C, which label will be affixed in the apposite space provided for this of the container C.

The label will show, at least, the customer code and corresponding barcode, personal data of the sales outlet, distribution data, consecutive number of the container C and possibly the publications contained in the container C.

During the operation of replacing the container C, the data on this container C will no longer be displayed on the monitor 32 of the other operator. When the operation is terminated, by pressing a "new container inserted" switch the cycle will resume.

If both operators of the station 29 are present (the station 29 can also operate with just one operator, if declared at the start of the pick-up cycle), they work on the same customer containers and enter the copies indicated by the respective monitors 32 thereof belonging to different publications (mode a) or to the same publication (tandem operation, mode b).

In mode a), each operator will operate "in turns" i.e. will insert in a stroke, going from the scale 28 to the last container C, the copies relating to the containers C nearest the operator, whereas in the return stroke to the scales 28 the operator will insert the copies relating to the containers C place further away.

In mode b), on the other hand, the operator will insert only the copies of the nearer containers C, as will also be displayed by the monitors 32.

The choice between the two modes can be made by the operators themselves if several packets of the same publication are present on the roller conveyor 26 and it will be activated automatically each time the second operator removes a packet of the publication that is already being processed by the other operator.

At the moment of activation of the installation it will be however possible to decide to work obligatorily in tandem mode.

Once the barcode has been read of the publication to which the packet refers, the control unit U will check the congruence between the weight detected by the scale 28 and copies provided for that packet, so as to perform a form of automatic check. The possible incongruence will be indicated on the monitor 32, and the operator will add the missing copy or copies or will remove the excess copy or copies; alternatively the error can be left, correcting the amounts displayed on the monitor 32 to be distributed in the containers C and recording this error by the control unit U in a processing report assigned to the operators, the customer, the publication and other interested parties.

A form of manual control can be provided, in which the copies are counted in two steps, by different operators: the one checks the work of the other. The operator of the shelf unit 11 counts the total copies provided for that pick-up cycle; the operator of the station 29 counts the copies of every single copy to be packaged for that cycle, as will be indicated to the operator by the monitors 32. The amount must be the same as the total: otherwise, the operator of the terminal station 29 will report the difference detected by pressing relevant keys of the monitor 32. The detected errors will be recorded by the control unit U, which will then supply a report on the behaviour of the operators. In this operating mode, the presence of the electronic scale 28 becomes superfluous.

The camera sensors 28, which are placed above the containers C of the customers, monitor the state of the containers C. They provide the control unit U with the information on the degree of filling of the containers C with the publications. In this manner, when the operator places copies in a container, the image relating thereto changes. In this manner, it is possible to verify whether:
- copies have been placed in a container and to what extent, as requested by the corresponding monitor;
- anything has been placed in a container in which nothing should have been placed.

The logical analysis of these signals (images) enables the presence or not to be decided of errors in the packaging procedure and in the signals that the control unit U has to send to the operators by the monitor 32 of the station 29.

The operator at the shelf unit 11, at the end of a batch of customers corresponding to a homogeneous dispatch group, can process entire publication packs relating to that dispatch group: the entire publication packs are the publication packs sent by the publishers that have to be delivered complete to a given customer. For the convenience of the person who will actually deliver to the customers and to avoid delivery errors, these packs must be labelled with the indication of the recipient customer and are placed on one of the two pallets B on which the containers C of that already closed delivery group rest, or on a separate pallet B if necessary. Accordingly, at the end of removal of the copies of an entire dispatch group, the operator of the shelf unit 11 will pick up the entire packs, as will be indicated by the displays 16 of the cells of the shelf unit 11 (it will be the control unit U that will "remember" to perform this work cycle). The packs placed on the conveyor belt 20 will be conveyed to one of the stations 29, as already seen, and will be taken by the operators of this station 29. The operators will pick up the packs one at a time and after reading the barcode, the control unit U will print the labels customized for the recipient customer from one of the printers 33 of the station 29. Having four printers 33 available, the control unit U will assign one printer 33 to one operator and another to the other. At the end of processing the entire packs of a dispatch group, the corresponding pallet B must be replaced. On the monitors 32 of the station 29 the appropriate messages for warning the operators will appear.

The disclosed and illustrated installation 10 has many advantages.

The copies of publications to be placed in the containers C for the sales outlets are loaded onto the shelf units 11 as they arrive from the publishers: this optimizes the loading process, thus reduces the necessary hours of work.

The tilted planes 13 with the rollers 14 promote loading and the correct arrangement of the copies.

During picking up, it is possible to minimize the path of the operator/s in front of the copies, placing at the beginning of the shelf unit the publications most requested by the sales outlets, and leaving at the other end those less requested by the sales outlets.

The action of the operator to pick up the copies from the supporting planes 13 is basic and is partially superimposed on the movement of the operator in front of the shelf unit 11.

The possibility indicated by the displays 16 of picking up entire packs plus the residual copies to reach the total to be picked up reduces also noticeably the total working time of this operator.

The possibility of monitoring the conveyor belts 20 and the roller conveyors 21, 22, 26, and the path of the packets along the latter enables the operator of the shelf unit to start a new pick-up cycle regardless of whether the preceding cycle was completed by the operators at the terminal packaging stations or not.

In view of the path that has to be travelled by the operator at the shelf unit 11 to return to the start, this solution would enable a second operator to be inserted to perform a work cycle that starts immediately after the end of the work cycle performed by the preceding operator, but intended for a different packaging terminal station, increasing noticeably the productivity of the installation.

The documents delivered to the sales outlets can be exact with respect to what is present in the containers C: in fact, possible errors of the operators detected by the double count of the copies picked up and placed in the containers C (for example whether the operator of the shelf unit 11 has picked up less than requested) can be transformed into a variation of the delivered quantity; the monitoring of the placing in container C, conducted with the help of the camera sensors 34 present in the station 29 enables the placing of incorrect copies in containers C and non-placing of copies in provided containers C to be eliminated.

It is then sufficient to print the delivery documents after packaging to have them corresponding exactly to the contents of the containers C.

The sequence of the containers C to be filled for the sales outlets can be chosen in the most suitable manner for the subsequent delivery process; for example, the containers C relating to the furthest sales outlets can be filled and dispatched first whereas the rest of the containers C will be filled and dispatched subsequently. This system enables the time of delivery of the products to the customers to be anticipated.

The containers C are filled and are positioned directly on the pallet B used for the dispatch, relating to a group of sales outlets to be served; there is thus no process of selecting and loading containers, or the corresponding technology. The simplification is very significant in terms of effort saved and technology neither purchased nor maintained.

If more sales outlets and thus more containers than those previously envisaged have to be served, for example to extend a dispatch zone, the distribution time spent by the installation will merely increase.

The installation can process with just a few operators, in the embodiment with three operators, who can be reduced to two with obviously an increase in processing time.

If it is desired to perform two work cycles, it will be sufficient to simply replace the operators at the end of the work shift thereof, continuing with the new team of operators.

The use of both the stations 29 enables reduced processing times to be obtained. By having available two separate conveyor belts 20 with separate drives at the shelf unit 11, it is possible to hypothesize the use of the installation 10 also for processing a small number of products with high general volumes and in a much reduced processing time. These are the typical requests for processing daily newspapers that are in fact a few different products (less than 50 in a provincial or regional marketplace), have large volumes to be distributed and very reduced processing time. In order to obtain this, the shelf unit 11 will be deemed to be divided into two equal parts, arranging the products to be distributed over the two halves of the shelf unit 11 thus obtained. One of the conveyor belts 20 will act as in the preceding description, and the other conveyor belt 20 will act in the opposite direction so as to direct the packets picked up at the other end from the preceding conveyor belt 20. Thus by arranging at this other end the same components 21-34, B, C seen in the embodiment, it is possible to duplicate the productivity of the installation, thus having four outlet points of the containers C to be directed to the newsagents. In this manner, the shelf unit 11 is reused for uses that are very different from one another. Everything would nevertheless occur under the control of the control unit U.

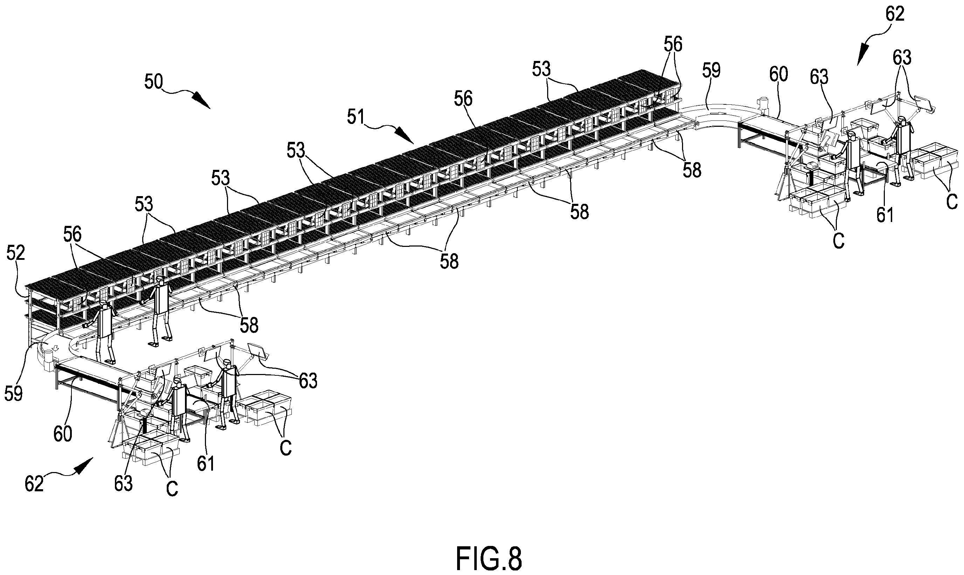

The distributing installation illustrated in fig.8, indicated generically with 50, is also intended for distributing printed publications and has many similarities with the distributing installation 10 disclosed above.

The installation 50 also provides a picking up area formed by a shelf unit 51.

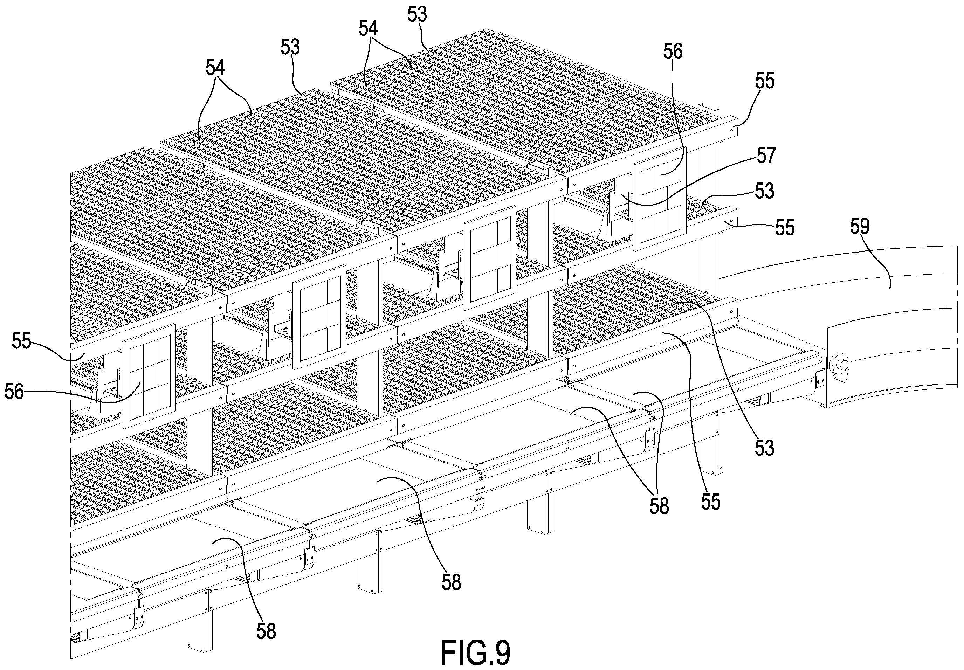

With reference to fig.9, the shelf unit 51 has a framework 52 to which a plurality of supporting planes 53 is fitted arranged according to a series of vertical rows; in the present embodiment the shelf unit 51 has twenty-three vertical rows of three supporting planes 53 each. Each lower or upper supporting plane 53 corresponds to three virtual pick-up cells, whereas each intermediate supporting plane 53 between the lower and the upper supporting plane corresponds to two virtual pick-up cells. Each row of three supporting planes 53 corresponds to a cell module.

Each supporting plane 53 is provided with smaller idling rollers 54 arranged in a series of parallel rows; each supporting plane 53 is further tilted downwards towards the front face of the shelf unit 51.

At the lower end part of each tilted supporting plane 53, on the front face of the shelf unit 51 a stop barrier 55 is arranged, where the stacks of publications will stop through the force of gravity.

At the stop barriers 55 a series of touchscreen monitors 56 is provided that are fitted to plates 57 that are integral with the stop barriers 55. The monitors 56 replace the LEDs 16 and the lighted push buttons 19 seen in the installation 10, performing the same function. Each monitor 56 is arranged between the two virtual pick-up cells of a respective intermediate supporting plane 53.

At each cell module a respective conveyor belt 58 is thus provided for a total of twenty-three conveyor belts 58. Such conveyor belts 58 are aligned and each conveyor belt 58 is driven independently with respect to the others according to one direction or according to an opposite advancement direction, as for the conveyor belts 20 of the installation 10.

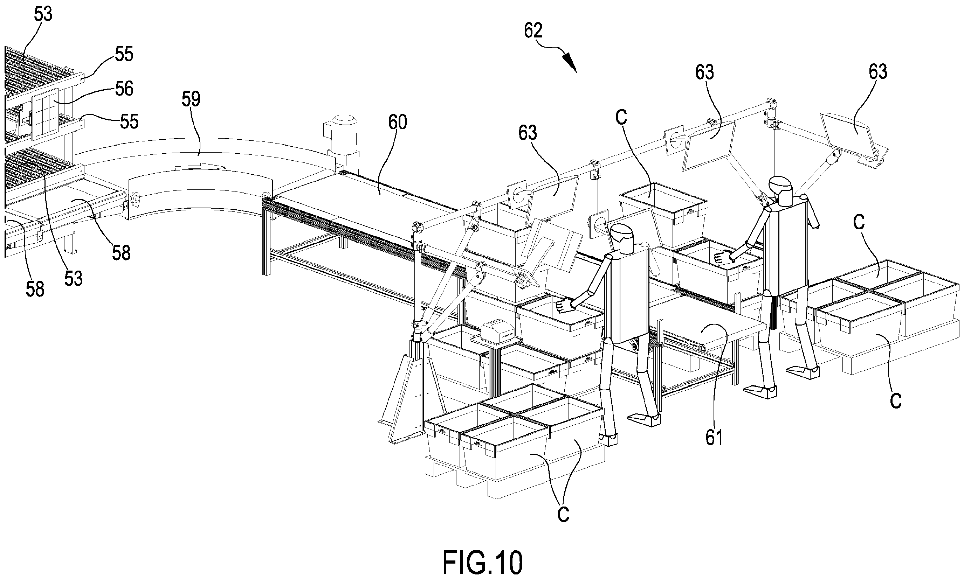

With reference to fig. 10, after the conveyor belts 58, at each end of the shelf unit 51 a curved conveyor belt 59 and two rectilinear conveyor belts 60 and 61 are provided in sequence.

At the end of the conveyor belts 59,60,61, respective barrier sensors are arranged that are not illustrated that are identical to the barrier sensors 27 of the installation 10.

At the end of the conveyor belt 61 weighing scale is inserted that is not illustrated that is identical to the scales 28 of the installation 10.

At the scale, barcode readers are fitted that are not illustrated that are identical to the barcode 31 readers of the installation 10.

At the scale, a further packaging end station 62 is provided that is identical to the packaging station 29 of the installation 10.

In the terminal station 62, groups of containers C are provided, as for the distributing installation 10, on which some touchscreen monitors 63 are provided, of larger dimensions but fewer in number than the monitors 32 of the installation 10. Label printers are also provided that are not illustrated that are identical to the label printers 33 of the installation 10.

Below the monitors 32, there are four 3D reading camera sensors which are not illustrated, which are identical to the camera sensors 34 of the installation 10.

Also the installation 50 is managed by a non-illustrated control unit, connected to the components seen above.

The operation of the installation 50 is as follows.

When the distribution cycle starts, the conveyor belts 58 are stationary. The control unit lights up with a green colour a square of the monitor 56 of the first cell of the first cell module where the copies to be picked up are present.

On the lighted square the number of copies to pick up is indicated by the control unit and the operator picks up the copies placed in the cell corresponding geometrically to that square and places the copies on the conveyor belt 58 of the module, which is at this moment stationary, stacked without separating. For convenience, and in order to operate rapidly, the operator can also pick up more than one packet of copies until the total indicated by the square of the lighted monitor 56 is reached. The single packets can also be placed on the conveyor belt 58 separately or superimposed, but not as single copies, and inside the conveyor belt 58 of the module being processed.

If the number of copies to pick up is greater than the number of copies that make up a publication pack, the control unit presents to the operator separately the number of entire packs to be picked up and the number of loose copies, each shown in a suitable field (copies or entire packs) of the monitor 56. For the sake of greater clarity, the fields that contain the entire packs and the numbers that indicate the loose copies can be a different colour.

Proceeding with the other cells, the operator will place a new packet of copies of a different publication in the space available inside the conveyor belt 58. If it is convenient for him to superimpose the packet on another packet already present on the conveyor belt and belonging to a different publication, the operator will turn the packet 90° in order to make the packet visible to subsequent operators.

A platform can also be provided at the shoulders of the operator with a mass circulation publication the pick-up data of which will be displayed in the central square of the monitor 56.

Once picking up has terminated in the module in which the operator is located, the operator will press a conveyor belt advancement button, which is displayed in the monitor 56. The conveyor belt 58 will move to the right (with reference to figures 8, 9, 10) and the operator will move to the next module placed on the operator's left.

Fig.9 shows the start of the right side of the shelf unit: the conveyor belt 58 will start to move to the right, whilst the operator, at the end of picking up on the first module, will pass to the left module, where the corresponding conveyor belt 58 is stationary.

The operator advances in the opposite direction to the motion of the conveyor belt 58, thus from right to left in fig. 9, until the publications have been picked up from all the cells of all the modules, repeating the work cycle disclosed.

The operation that has just been disclosed represents a pick-up cycle that may refer to a number of customers that vary from one to eight, as preferably defined at the start of the work cycle. The control unit determines on a case-by-case basis the number of customers comprised in that work cycle, up to the maximum permitted by the geometry of the installation, namely eight in the embodiment, in complete autonomy.

Upon reaching the end of the shelf unit 51, or reaching the last module on which a luminous lighted red square of a monitor 56 is present, the pick-up cycle is terminated and the operator will press the red push button on the monitor 56 to alert the control unit to the end of the pick-up cycle.

At the end of the pick-up cycle, the control unit will again light up a square of green colour of a monitor 56 to indicate the most favourable starting point for the next pick-up cycle. The operator will go, from left to right, as far as the cell module with the lighted green square and during this path can take care of refilling with publications the empty cells or the cells with few copies. After reaching the aforesaid cell module, the operator will press the green switch of the module to start the following pick-up cycle; only then will the data light up relating to the new work cycle in the monitor 56 of the module.

The packets of copies placed on the conveyor belts 58 (which for the sake of convenience will be called copy trolleys) are all dragged together to the right until they reach the line of conveyor belts 59,60,61. This line of conveyor belts will receive a copy trolley corresponding to what is contained in a conveyor belt 58. This trolley will enter in the line of conveyor belts 59 and 60; once the trolley has entered, the conveyor belts will stop so as to fill it with the subsequent wagons arriving, keeping each trolley separate from the subsequent and preceding trolley. The barrier sensors will enable the wagons to advance inside the line of conveyor belts 59, 60, 61.

The final conveyor belt 61 has a linear dimension equal to that of the conveyor belt 58 (as much as a trolley), just as the conveyor belt 60 has an extent that is the same as a complete multiple of a conveyor belt 58; whereas the curved conveyor belt 59 is commensurate with the extent of just one trolley. This means that the advancement of the packets on the conveyor belt 58 will always be the same by unit as the extent of the trolley.

The barrier sensors enable the control unit to detect the transit of the trolleys or stop or start the conveyor belts 59,60,61, depending on the needs of the packet advancement process, in order to maintain the trolleys in an ordered position, and thus the packets contained therein, along the path. The control system will also take account of the geometric length of each trolley, controlling the advancement of the surface of the conveyor belts 58,59,60,61 (with an encoder or something else).

The conveyor belt 61 will take the publications trolley inside the packaging station 62.

When a packet is picked up from the end of the conveyor belt 61, the space left empty is immediately filled, making all the preceding packets of the conveyor belt 61 advance, whilst the other conveyor belts 59 and 60 will remain stationary.

After the conveyor belt 61 is emptied, the system will move a new trolley forward from the conveyor belts 59 and 60 to the conveyor belt 61.

If, during processing, all the zones (the trolleys) of the conveyor belt 60 are filled, new trolleys cannot be inserted, and the conveyor belts 59,60 are temporarily stopped; and thus also all the conveyor belts 58 that are to the right of the operator.

As soon as the operators of the station 62 have picked up all the packets from the conveyor belt 61, the line of conveyor belts 59,60 will start up again, making a new trolley enter the conveyor belt 61, and thus the conveyor belts 58,59,60 upstream.

The second line of conveyor belts 59,60,61 and the second packaging terminal station 62, to the left in the figures, will be fed by the operator during the return stroke from the left end of the shelf unit 51 to the right end. During this stroke from left to right, all the conveyor belts 58 will be commanded one by one to rotate in the opposite direction to the preceding situation, thus directing the trolleys of picked up packets to the left terminal station 62. The operation of the system in this second stroke from left to right, is similar to that of the stroke in the advancement direction from right to left.

The distribution installation 50 has the same advantages disclosed for the distribution installation 10 disclosed above and in addition has greater productivity with respect to the installation 10.

It is clear that variations on and/or additions to what has been disclosed and illustrated in the attached drawings can be provided.

The number and the arrangement of the shelf units can vary according to need.

The same applies to the number of supporting planes.

Also the number and the arrangement of the roller conveyors 21,26, of the roller switching means 22, and of the terminal packaging stations can vary according to need.

The roller conveyors 26 can also be replaced with cloth conveyor belts provided with barrier sensors at the ends to detect the presence of the packets. In this case the roller switching means 22 can be replaced with a conveyor belt balancing on a horizontal axis, lifted or lowered at the ends by means of a suitable actuator, to direct the packets to one or another of several conveyor belts superimposed on parallel planes, obtaining the same separation result as the flow of packets to one or the other terminal packaging station. This conveyor solution can be preferable for example in the case of a particular type of product to be conveyed that could generate problems if conveyed on rollers.

Also the number and the arrangement of the electronic scales can vary. As seen above, the electronic scales can also not be provided.

The sensors arranged along the motor-driven roller conveyors can be of any type.

The system for recognizing the copy with a barcode can be made with a laser ray device or image recognition device.

Electronic paper (i-paper) labels can also be used to identify the containers C.

With respect to the embodiment illustrated a different number of containers and thus of customers can be envisaged, but also a different dimension of the containers and a different number and dimension of the pallets.

The containers can be devoid of lids.

In general, the containers can be replaced by any type of container that is suitable for the purpose.

A different arrangement could enable a printer to be used for each operator.

There can be one camera sensor per container or one for two or more containers, depending on the preferred geometric arrangements.

Also more than two terminal packaging stations can be provided.

The disclosed and illustrated installations are intended for distributing printed publications.

However the use of the installations for other types of objects, possibly packaged in boxes that can be stacked, picked up, conveyed and collected in a similar manner to what is seen for the printed publications cannot be ruled out.

## Claims

1. Installation (10;50) for distributing objects in general and in particular printed publications, comprising:
- at least one shelf unit (11;51) with a plurality of supporting planes (13; 53), each of which is suitable for receiving one or more stacks of publications, each stack of publications consisting of copies of the same publication, the supporting planes (13;53) being arranged in groups, each of which consists of a row of superimposed supporting planes (13;53);
- a series of display means (16;56) each arranged at a respective stack of copies;
- first conveying means (20;58) arranged at the shelf unit (11;51), that conveys packets of copies picked up from the stacks and put down individually on the first conveying means (20,58);
- second conveying means (21-26;59-61) arranged downstream of the first conveying means (20;58), that conveys the packets of copies coming from the first conveying means (20;58);
- first sensor means (27) arranged along the second conveying means (21-26;59-61), that counts the conveyed packets of copies and identifies the transit of the conveyed copies;
- at least two terminal packaging stations (29;62), each arranged at the end of the second conveying means (21-26;59-61) and comprising a plurality of containers (C) that are suitable for containing the publications collected at the end of the second conveying means (21-26;59-61), identifying means (31) that identifies the counted copies, one or more monitors (32;63) to display the distribution scheme of the publications in the containers (C), second sensor means (34) for detecting the placing of copies in the containers (C);
- a control unit (U) connected to the display means (16;56), to the conveying means (20-26;58-61), to the sensor means (27), to the identifying means (31), to the monitors (32;63), and to the further sensor means (34), said control unit (U) indicating by the display means (16;56) the number of copies to pick up from each stack for each group of sales outlets, controlling the correct movement of the publications on the second conveying means (21-26;59-61), and indicating on the monitor (32;63) the aforesaid distribution scheme of the publications in the containers (C) in relation to the single customers;
wherein the first conveying means comprises at least one first conveying device (20;58) and a second conveying device (20;58) that are aligned and driven independently of one another each according to one direction or according to an opposite advancement direction.

2. Distributing installation according to claim 1, wherein the first conveying means comprises a series of conveying devices (20;58) that are aligned and driven independently of one another each according to one direction or according to an opposite advancement direction, and each arranged at a respective group of supporting planes (13;53).

3. Distributing installation according to claim 1 or 2, wherein the second conveying means (21-26) comprises one or more switching means (22) for sorting the publications at the terminal stations (29).

4. Installation according to any one of the preceding claims, wherein the second conveying means (59-61) is arranged at the ends of the shelf unit (51).

5. Distributing installation according to any one of the preceding claims, wherein at the end of the second conveying means (21-26;59-61), at each terminal station (29; 62), scale (28) is provided for weighing the packets of copies, which is connected to the control unit (U).

6. Distributing installation according to any one of the preceding claims, wherein each supporting plane (13;53) is tilted towards the front face of the shelf unit (11;51) and is provided with idler rollers (14;54) for sliding the copies, and wherein the shelf unit (11;51) has a stop barrier (15;55) for the copies at the low end part of each tilted plane (13;53).

7. Distributing installation according to any one of the preceding claims, wherein the display means comprises LED numeric displays (16).

8. Distributing installation according to any one of the preceding claims, wherein on each shelf unit (11) luminous push buttons (19) in one or more colours are provided, connected to the control unit (U) to indicate the start and the end of an operation of picking up copies relating to a sales outlet.

9. Distributing installation according to any one of claims 1-6, wherein the display means comprises touchscreen monitors (56).

10. Distributing installation according to any one of the preceding claims, wherein the first conveying devices consists of conveyor belts (20;58).

11. Distributing installation according to any one of the preceding claims, wherein the first sensor means comprises barrier sensors (27).

12. Distributing installation according to any one of the preceding claims, wherein the identifying means comprises barcode readers (31).

13. Distributing installation according to any one of the preceding claims, wherein the second sensor means comprises camera or 3D camera sensors (34).

14. Distributing installation according to any one of the preceding claims, wherein each terminal station (29;61) comprises one or more label printers (33) to be applied to the containers (C) to assign the containers (C) to the sales outlets.

15. Distributing installation according to any one of the preceding claims, wherein each terminal station (29) comprises one or more conveyable pallets (B), each of which is suitable for supporting a plurality of containers (C) relating to a group of customers belonging to the same delivery zone.
